# EUROPÄISCHE PATENTANMELDUNG

(11) **EP 2 058 278 A2**
(43) Veröffentlichungstag der Anmeldung: **13.05.2009**
(21) Anmeldenummer: 08164935.2
(22) Anmeldetag: 23.09.2008
(51) Int. Cl.: C01B 31/00, C01B 31/04, C09K 3/10, C09K 5/06, C08K 3/00, C08K 3/04, C04B 35/536

(54) **Expandierter Graphit und Verfahren zu seiner Herstellung**

(30) Priorität: 08.11.2007 DE 102007053652
(71) Anmelder: SGL Carbon AG, 65203 Wiesbaden (DE); BAM Bundesanstalt für Materialforschung und- Prüfung, 12205 Berlin (DE)
(72) Erfinder: Christ, Martin, 86159 Augsburg (DE); Mach, Reinhard, 13059 Berlin (DE); Meyer-Plath, Asmus, 14471 Potsdam (DE); Maneck, Heinz-Eberhard, 15745 Wildau (DE); Friedrich, Jörg, Prof. Dr., 15537 Erkner (DE); Oleszak, Franz, 16727 Oberkrämer (DE); Mielke, Werner, Dr., 12203 Berlin (DE)

(57) **Zusammenfassung**

Die Erfindung betrifft einen expandierten Graphit aus einem graphitischen oder teilgraphitischen Ausgangsmaterial ausgewählt aus der Gruppe bestehend aus Naturgraphit, komprimiertem expandierten Graphit, teiloxidiertem Graphit und/oder Graphitfasern mit einer BET-Oberfläche von > 30 m²/g, erhalten durch die Umsetzung des Ausgangsmaterials mit interkalationsfähigen Stoffen, interkalationsfähigen Stoffgemischen zu einer als Einlagerungsverbindung bezeichneten Verbindung und anschließender Expansion in einem Plasma.

## Beschreibung

Die Erfindung betrifft einen expandierten Graphit aus einem graphitischen oder teilgraphitischen Ausgangsmaterial ausgewählt aus der Gruppe bestehend aus Naturgraphit, komprimiertem expandierten Graphit, teiloxidiertem Graphit und/oder Graphitfasern, wobei das Ausgangsmaterial mit interkalationsfähigen Stoffen oder interkalationsfähigen Stoffgemischen zu einer im folgenden als Einlagerungsverbindung bezeichneten Verbindung umgesetzt wird und anschließend expandiert wird. Die Erfindung betrifft weiterhin die Verwendung dieser Materialien.

Aus dem Dokument DE 66804 C ist die Herstellung geblähter, eine wurmförmige Strukturierung aufweisender Graphitpartikel durch die thermische Zersetzung einer Graphiteinlagerungsverbindung bekannt, wie sie beispielsweise durch Einwirkung konzentrierter Schwefelsäure oder eines Gemischs aus Salpetersäure und Schwefelsäure auf Naturgraphitpartikel erhalten wird. Diese geblähten - im folgenden als expandierter Graphit bezeichneten - Partikel sind außerordentlich bildsam und weisen große spezifische Oberflächen auf. Die Formbarkeit der expandierten Graphitpartikel, die Festigkeit und Flexibilität der aus den Partikeln hergestellten Gebilde und die spezifische Oberfläche der Partikel werden wesentlich durch den Grad der Expansion bestimmt, worunter die Ausdehnung der Partikel in Richtung der c-Achse des Graphitkristalls zu verstehen ist, die auch über die Volumenzunahme einer Partikelschüttung quantifiziert werden kann. Gemäß DE 1253130 C1 sollte der Expansionsgrad wenigstens 80, vorzugsweise mindestens 200 betragen, da dann ohne Binderzusatz durch Zusammenpressen geblähter Partikel hergestellte Formlinge eine ausreichende Festigkeit erhalten.

Die Expansion der Graphitpartikel ist offensichtlich darauf zurückzuführen, dass sich beim Erhitzen ausdehnende gasförmige Zersetzungs- und/oder Verdampfungsprodukte der Einlagerungsverbindungen die Schichtebenen oder Schichtebenenpakete des Graphitkristalls auseinander drücken. Dieser Prozess endet mit dem Ausbruch des zunächst in den einzelnen Körnern eingeschlossenen Gases und der Expansionsgrad ist etwa umgekehrt proportional zu der während der Aufheizphase austretenden Gasmenge (M.B. Dowell, 12. Conf. on Carbon, 28. Juli bis 1. August 1975, Pittsburgh, Pennsylvania, S. 31). Zur Herstellung von Graphitpartikeln mit einem hohen Expansionsgrad, die sich durch eine gute Verarbeitbarkeit und eine hohe spezifische Oberfläche auszeichnen, muss für eine gewisse Zeitspanne deutlich mehr Gas im Inneren des Festkörpers erzeugt werden als durch entstehende Kanäle, Risse und Poren ausströmen kann.

Die Erfindung hat sich die Aufgabe gestellt einen expandierten Graphit der eingangs dargelegten Art anzugeben, der durch das Verfahren zu seiner Herstellung charakterisiert ist.

Die Aufgabe wird in der Weise gelöst, dass das Ausgangsmaterial der eingangs genannten Art mit einem Plasma behandelt wird.

Es wurde überraschend gefunden, dass mit einem Plasma unter den gewählten Bedingungen trotz einer sehr geringen Verweildauer der Einlagerungsverbindung in der heißen Plasmazone, die durchaus im Millisekundenbereich liegen kann, derart hohe Aufheizraten des Materials erreicht werden können, dass es zur Expansion kommt. Dabei werden Graphitexpandate mit einer BET-Oberfläche von > 30 m²/g erhalten. Weiter vorteilhafte Ausgestaltungen der Erfindung sind in den Ansprüchen 2 bis 14 dargelegt und sind damit Teil der Beschreibung.

Es wurde weiterhin gefunden, dass ein so erhaltener expandierter Graphit eine gegenüber dem aus dem Stand der Technik bekannten expandierten Graphit eine größere Oberfläche aufweist, die chemisch und morphologisch modifiziert sein kann. Damit kann ein Nachteil der bekannten expandierten Graphite überwunden werden, der in einer für viele Medien geringen Benetzbarkeit des Materials besteht. Die neuen expandierte Graphite sind beispielsweise als Absorbermaterial für flüssige oder gasförmige Medien oder als Zuschlagsstoff für Kompositwerkstoffe nutzbar.

Gegenüber den aus dem Stand der Technik bekannten Verfahren zur Herstellung expandierter Graphite erlaubt das erfindungsgemäße Verfahren ein deutlich höheres Maß an Prozessvielfalt in bezug auf die Herstellung chemisch und morphologisch funktionalisierter expandierter Graphite. In nur einem Schritt können die Expansion und die Modifizierung vollzogen werden. Damit weist es prozesstechnische Vorteile gegenüber dem in DE 10 2007 023 315 A1 (Verfahren zur Herstellung eines Latentwärmespeichermaterials) beschriebenen sequentiellen Verfahren auf. Durch Beimischung von Sauerstoff oder anderen trockenätzend wirkenden Gasen als Prozessgas können beispielsweise die spezifische Oberfläche und die Oberflächenmorphologie des Expandats modifiziert werden. Darüber hinaus können funktionelle chemische Oberflächengruppen durch Beimischung funktionalisierender Prozessgase auf den mit der Gasphase in Kontakt stehenden Oberflächen des Expandats erzeugt werden.

Die Aufgabe der simultanen Expansion und Modifizierung wird dadurch gelöst, dass das zu expandierende Material der Wirkung eines Plasmas ausgesetzt wird, dem ein oder mehrere Prozessgase zugesetzt werden. Dazu kann das zu expandierende Material auf einer Transportvorrichtung als Schüttung durch das Plasma bewegt, als vereinzelte Partikel durch das Plasma verrieselt, versprüht oder in einer Wirbelschicht in der Plasmazone gehalten werden. Das Plasma wird vorzugsweise als lokalisierte Zone, beispielsweise als Plasmafackel, Laserfokus oder als ausgedehnter angeregter Bereich, beispielsweise einer Mikrowellenentladung, erzeugt.

Das Plasma dient bei diesem Vorgehen als Quelle von hochenergetischen gasförmigen Spezies, wie zum Beispiel rotatorisch, vibratorisch und/oder elektronisch angeregte Moleküle oder Radikale, elektronisch angeregte Atome oder Ionen der umgebenden Gasatmosphäre sowie Elektronen und Photonen. Diese Spezies übertragen hinreichend Enthalpie von der Plasmagasphase auf die Einlagerungsverbindung, so dass die Aufheizrate und Verweildauer des eingebrachten Materials ausreichen, um die Einlagerungsverbindung zu expandieren. Darüber hinaus können die chemisch aktiven Bestandteile der Gasatmosphäre auf die chemischen Bindungen der mit Gasphase in Kontakt stehenden Oberfläche der Einlagerungsverbindung oder des expandierten Graphites in einer Weise wirken, dass es zu Bindungsbrüchen in der Oberfläche und nachfolgend zur Bildung von Reaktionsprodukten mit Spezies der Gasphase kommt. Diese Reaktionen stellen sich in Form funktioneller Oberflächengruppen dar oder führen zu einem Materialabtrag. Die Art der simultan zur Expansion stattfindenden chemischen oder morphologischen Modifizierung der Partikeloberfläche durch das Plasma kann durch die Wahl der zugesetzten Plasmaprozessgase und/oder durch die Art der Interkalationsverbindung beeinflusst werden. Dadurch kann das Plasma ätzende, chemisch modifizierende oder beschichtende Wirkung haben. Auf diese Weise kann eine Vielzahl verschiedener funktioneller Gruppen beziehungsweise geschlossene oder offene Schichten auf expandierten Oberflächen erzeugt werden. Dazu gehören sauerstoffhaltige, stickstoffhaltige, halogenhaltige, siliziumhaltige, phosphorhaltige, metallhaltige und andere Gruppen oder Schichten aus diesen.

In dieser Weise oberflächenfunktionalisierte, expandierte Graphite weisen eine verbesserte Benetzbarkeit für ausgewählte flüssige oder gasförmige Medien auf. Sie können beispielsweise als Adsorbermaterialien eingesetzt werden. Funktionelle Gruppen oder Schichten können auch helfen, die Dispergierbarkeit expandierter Graphite zu verbessern, die für die Herstellung von Kompositmaterialien mit homogen verteilten Graphiteinlagerungen hilfreich ist. Eine spezielle Funktionalisierung oder Beschichtung kann außerdem zu einer chemischen Wechselwirkung zwischen expandiertem Graphit und der umgebenden Matrix eines Kompositmaterials führen, durch die beispielsweise die mechanischen oder wärmeleitenden oder elektrischen Eigenschaften des Komposits in positiver Weise beeinflusst werden können. Die Verwendung der erfindungsgemäßen expandierten Graphite ist in den Ansprüchen 15 bis 18 angegeben, die dadurch gleichfalls ein Bestandteil der Beschreibung sind.

Die für die zur Erzeugung und zum Betrieb des Plasmas notwendige Energie kann durch Ionen, Elektronen, elektrische oder elektromagnetische Felder einschließlich Strahlung auf das Prozessgas übertragen werden. Technisch kann die Anregung eines zur Expansion von Einlagerungsverbindungen geeigneten Gasplasma in einem sehr großen Druckbereich, vorzugsweise im Hochdruckbereich von 50.000 bis 150.000 Pa, besonders bevorzugt im Normaldruckbereich, durch eine Gleichstrom-Gasentladung oder Hoch- oder Niederfrequenz-Wechselspannungs-Gasentladung, ein energiereiches elektromagnetisches Strahlungsfeld, wie es beispielsweise eine Mikrowellenquelle oder ein Laser erzeugt, oder mittels einer Elektronen- oder Ionenquelle realisiert werden.

Bei Verwendung eines Lasers muss dieser für das hier beschriebene Verfahren, im Gegensatz zur im Patent EP 87489 A1 beschriebenen Expansion mittels LaserStrahlung, eine kritische Strahlungsdichte übertreffen, oberhalb derer sich im Laserfokus ein Plasma ausbildet, das die Einlagerungsverbindung zusätzlich durch die von Photonen vermittelte Strahlung auch über den Enthalpieeintrag rotatorisch, vibratorisch und/oder elektronisch angeregter Gasmoleküle, Atome, Ionen oder Radikale aufheizt.

Das Plasma wird für das erfindungsgemäße Verfahren diskontinuierlich oder, vorzugsweise, kontinuierlich betrieben. Die Temperatur der Neutralgaskomponente des Plasmas sollte vorzugsweise mehr als 500 K betragen.

Das Plasma kann sowohl in Prozessgasen unter reduziertem Normaldruck als auch erhöhtem Druck erzeugt werden, wobei für eine einfache Prozessführung vorzugsweise in Prozessgasen unter oder nahe dem Atmosphärendruck gearbeitet wird.

Die erfindungsgemäße Expansion der Einlagerungsverbindungen im Plasma gestattet sehr hohe Expansionsraten bei sehr kurzen Prozesszeiten, die im Millisekundenbereich liegen können. Der Expansionsgrad kann über die Plasmaleistung und die Verweilzeit der Partikel in der heißen Plasmazone in einem weiten Bereich kontrolliert werden.

Die Größe der mit einem Plasma expandierbaren Partikel einer Einlagerungsverbindung erstreckt sich von mehreren Millimetern bis hinab in den zweistelligen Nanometerbereich. Neben interkalierten graphitischen oder teilgraphitischen Verbindungen können auch interkalierte graphitische Kohlenstofffasern und interkalierte graphitische Kohlenstoffnanofasern mit dem Verfahren expandiert werden.

Die Erfindung wird nachstehend anhand von Beispielen erläutert.

### Vergleichsbeispiel 1

Kommerziell erhältliches Graphithydrogensulfat SS3 (Fa. Sumikin Chemical Co., Ltd; Tokyo, Japan) wurde in einem Muffelofen schockartig auf 1000 °C erwärmt. Das so erhaltene Expandat wies eine Dichte von 5 kg/m³ auf. Seine chemische Zusammensetzung betrug gemäss XPS-Analyse C = 97,1 Atom% (at.%); O = 1,9 at.%. Das erhaltene Graphitexpandat besitzt eine BET-Oberfläche von 19 m²/g. Die Wasseraufnahme eines Formkörpers mit einer Dichte von 500 kg/m³ aus verpresstem Expandat betrug nach fünfminütiger Auslagerung in destilliertem Wasser weniger als 10 % der Formkörpermasse.

### Beispiel 1

Kommerziell erhältliches Graphithydrogensulfat SS3 wurde bei Atmosphärendruck in eine mit 4 MHz angeregte, induktiv gekoppelte thermische Plasmafackel eingeblasen. Als Prozessgas wurden 70 Standardliter pro Minute (slm) Argon zugegeben. Die eingespeiste elektrische Leistung betrug 1,45 kW. Die Förderrate des Graphithydrogensulfats betrug 7,3 g/60 s und seine Einströmgeschwindigkeit betrug 5,9 m/s. Das erhaltene Expandat wies eine Dichte von 4,7 kg/m³ auf. Seine chemische Zusammensetzung betrug gemäss XPS-Analyse C = 95 at.% und O = 5 at.%. Die Energieeffizienz betrug 3,3 kWh/kg Expandat. Das erhaltene Graphitexpandat besitzt eine BET-Oberfläche von 38 m²/g. Die Wasseraufnahme eines Formkörpers mit einer Dichte von 500 kg/m³ aus verpresstem Expandat betrug nach fünfminütiger Auslagerung in destilliertem Wasser 303 % der Formkörpermasse.

### Beispiel 2

Kommerziell erhältliches Graphithydrogensulfat SS3 wurde bei Atmosphärendruck in eine mit 4 MHz angeregte, induktiv gekoppelte thermische Plasmafackel eingeblasen. Als Prozessgas wurden 120 slm Argon zugegeben. Die eingespeiste elektrische Leistung betrug 9,6 kW. Die Förderrate des Graphithydrogensulfats betrug 3,1 g/60 s und seine Einströmgeschwindigkeit betrug 1,5 m/s. Das erhaltene Expandat wies eine Dichte von 1,9 kg/m³ auf. Seine chemische Zusammensetzung betrug gemäss XPS-Analyse C = 97,7 at.% und O = 2,3 at.%. Die Energieeffizienz betrug 51,9 kWh/kg Expandat. Das erhaltene Graphitexpandat besitzt eine BET-Oberfläche von 45 m²/g. Die Wasseraufnahme eines Formkörpers mit einer Dichte von 500 kg/m³ aus verpresstem Expandat betrug nach fünfminütiger Auslagerung in destilliertem Wasser 41 % der Formkörpermasse.

### Beispiel 3

Kommerziell erhältliches Graphithydrogensulfat SS3 wurde bei Atmosphärendruck in eine mit 4 MHz angeregte, induktiv gekoppelte thermische Plasmafackel eingeblasen. Als Prozessgas wurden 120 slm Argon zugegeben. Die eingespeiste elektrische Leistung betrug 5,4 kW. Die Förderrate des Graphithydrogensulfats betrug 3,0 g/60 s und seine Einströmgeschwindigkeit betrug 5,9 m/s. Das erhaltene Expandat wies eine Dichte von 4,1 kg/m³ auf. Seine chemische Zusammensetzung betrug gemäss XPS-Analyse C = 96,9 at.% und O = 3,1 at.%. Die Energieeffizienz betrug 27,2 kWh/kg Expandat. Das erhaltene Graphitexpandat besitzt eine BET-Oberfläche von 42 m²/g. Die Wasseraufnahme einer Tablette aus verpresstem Expandat nach fünfminütiger Auslagerung in destilliertem Wasser betrug 270 % der Tablettenmasse.

### Beispiel 4

Kommerziell erhältliches Graphithydrogensulfat SS3 wurde bei Atmosphärendruck in eine mit 4 MHz angeregte, induktiv gekoppelte thermische Plasmafackel eingeblasen. Als Prozessgas wurden 120 slm Argon zugegeben. Die eingespeiste elektrische Leistung betrug 5,8 kW. Die Förderrate des Graphithydrogensulfats betrug 3,0 g/min und seine Einströmgeschwindigkeit betrug 53,1 m/s. Das erhaltene Expandat wies eine Dichte von 15,2 kg/m³ auf. Seine chemische Zusammensetzung betrug gemäss XPS-Analyse C = 96,1 at.% und O = 3,9 at.%. Die Energieeffizienz betrug 32,2 kWh/kg Expandat. Das erhaltene Graphitexpandat besitzt eine BET-Oberfläche von 30 m²/g. Die Wasseraufnahme eines Formkörpers mit einer Dichte von 500 kg/m³ aus verpresstem Expandat betrug nach fünfminütiger Auslagerung in destilliertem Wasser 439 % der Formkörpermasse.

## Patentansprüche

1. Expandierter Graphit aus einem graphitischen oder teilgraphitischen Ausgangsmaterial ausgewählt aus der Gruppe bestehend aus Naturgraphit, komprimiertem expandierten Graphit, teiloxidiertem Graphit und/oder Graphitfasern mit einer BET-Oberfläche von > 30 m²/g, erhalten durch die Umsetzung des Ausgangsmaterials mit interkalationsfähigen Stoffen, interkalationsfähigen Stoffgemischen zu einer als Einlagerungsverbindung bezeichneten Verbindung und anschließende Expansion in einem Plasma.

2. Expandierter Graphit nach Anspruch 1, erhalten durch die zur Expansion führende Erwärmung der Einlagerungsverbindung infolge des Enthalpieeintrages eines mit Hilfe eines Plasmas angeregten Prozessgases.

3. Expandierter Graphit nach Anspruch 1, erhalten durch Behandlung der Einlagerungsverbindung im Plasma eines elektrostatischen Feldes.

4. Expandierter Graphit nach Anspruch 1, erhalten durch Behandlung der Einlagerungsverbindung im Plasma eines oder mehrerer elektromagnetischer Wechselfelder.

5. Expandierter Graphit nach Anspruch 4, erhalten durch Behandlung der Einlagerungsverbindung in einem Plasma, dessen elektromagnetischen Anregungsfrequenzen unterhalb 100 Hz, vorzugsweise bei einer Netzfrequenz von 50 oder 60 Hz, liegt.

6. Expandierter Graphit nach Anspruch 4, erhalten durch Behandlung der Einlagerungsverbindung in einem Plasma, dessen elektromagnetischen Anregungsfrequenzen im so genannten Niederfrequenzbereich zwischen 100 Hz und 10 kHz liegt.

7. Expandierter Graphit nach Anspruch 4, erhalten durch Behandlung der Einlagerungsverbindung in einem Plasma, dessen elektromagnetischen Anregungsfrequenzen im so genannten Radiofrequenzbereich zwischen 10 kHz und 300 MHz, vorzugsweise mit einem Vielfachen der industriell freigegebenen 13,56 MHz, liegt.

8. Expandierter Graphit nach Anspruch 4, erhalten durch Behandlung der Einlagerungsverbindung in einem Plasma, dessen elektromagnetischen Anregungsfrequenzen im so genannten Mikrowellenbereich zwischen 300 MHz und 300 GHz, vorzugsweise bei einem Vielfachen der industriell freigegebenen 2,45 GHz, liegt.

9. Expandierter Graphit nach Anspruch 4, erhalten durch Behandlung der Einlagerungsverbindung in einem Plasma, dessen elektromagnetischen Anregungsfrequenzen im Bereich oberhalb von 300 GHz liegt, vorzugsweise mit Laserstrahlung.

10. Expandierter Graphit nach einem oder mehreren der Ansprüche 1 bis 9, erhalten durch Behandlung der Einlagerungsverbindung in einem Plasma, dem aktivierende Prozessgase ausgewählt aus der Gruppe der Edelgase zugesetzt werden.

11. Expandierter Graphit nach einem oder mehreren der Ansprüche 1 bis 9, erhalten durch Behandlung der Einlagerungsverbindung in einem Plasma, dem oxidierende Prozessgase wie Luft, Sauerstoff, Kohlendioxid, Wasser oder wasserstoffperoxidhaltige Lösungen zugesetzt werden.

12. Expandierter Graphit nach einem oder mehreren der Ansprüche 1 bis 9, erhalten durch Behandlung der Einlagerungsverbindung in einem Plasma, dem reduzierende Prozessgase wie Wasserstoff zugesetzt werden.

13. Expandierter Graphit nach einem oder mehreren der Ansprüche 1 bis 9, erhalten durch Behandlung der Einlagerungsverbindung in einem Plasma, dem Prozessgase ausgewählt aus der Gruppe der Stickstoff-, Halogen-, Silizium-, Phosphor- oder schwefelhaltige funktionelle Gruppen erzeugenden Gase zugesetzt werden.

14. Expandierter Graphit nach Anspruch 10 bis 13, erhalten durch Behandlung der Einlagerungsverbindung in einem Plasma, dem ein oder mehrere der genannten Prozessgase zugesetzt werden.

15. Verwendung eines expandierten Graphites nach einem oder mehreren der Ansprüche 1 bis 14 als Adsorptions-, Dichtungs-, Wärmeleit- oder Wärmeisolationsmaterial in Form von Schüttgut, Folien, Platten oder Formkörpern.

16. Verwendung eines expandierten Graphites nach einem oder mehreren der Ansprüche 1 bis 14 zur Bildung von Kompositen mit organischen Materialien, vorzugsweise Polymeren.

17. Verwendung eines expandierten Graphites nach einem oder mehreren der Ansprüche 1 bis 14 zur Bildung von Kompositen mit anorganischen Materialien, vorzugsweise mineralischen Baumaterialien.

18. Verwendung nach Anspruch 15, als Latentwärmespeicher durch Mischung oder Imprägnierung eines graphitischen oder teilgraphitischen Materials mit einer mittleren Partikelgröße im Bereich von 10 nm bis 10 mm, welches mit einem Plasma im Druckbereich von 5000 Pa bis 300.000 Pa behandelt ist, mit einem Phasenübergangsmaterial ausgewählt aus der Gruppe bestehend aus Paraffinen, Zuckeralkoholen, Gashydraten, Wasser, wässrige Lösungen von Salzen, Salzhydraten, Mischungen aus Salzhydraten, Salzen (insbesondere Chloriden und Nitraten) und eutektische Mischungen von Salzen, Alkalimetall-Hydroxiden sowie Mischungen aus mehreren der vorgenannten Phasenwechselmaterialien, beispielsweise Mischungen aus Salzen und Alkalimetall-Hydroxiden oder aus Paraffinen und Salzhydraten.
